# EUROPÄISCHE PATENTANMELDUNG

(11) **EP 3 851 314 A1**
(43) Veröffentlichungstag der Anmeldung: **21.07.2021**
(21) Anmeldenummer: 20151874.3
(22) Anmeldetag: 15.01.2020
(51) Int. Cl.: B60L 50/20, B60L 3/00, B62M 6/45, H02K 7/18

(54) **ANTRIEBSSTRANG FÜR FAHRZEUGE MIT PEDALANTRIEB**

(71) Anmelder: Schaeffler Technologies AG & Co. KG, 91074 Herzogenaurach (DE)
(72) Erfinder: Osterlänger, Jürgen, 91448 Emskirchen (DE); Glücker, Markus, 90482 Nürnberg (DE); Kattner, Jens, 91085 Weisendorf (DE); Wald, Lukas, 91325 Adelsdorf (DE); Braune, Steffen, 38855 Wernigerode (DE); Knut, Hahne, 38855 Wernigerode (DE); Meissner, Knut, 38855 Wernigerode (DE)

(57) **Zusammenfassung**

Die Erfindung betrifft einen Antriebsstrang für ein elektromotorisch unterstütztes, kettenloses, mit Muskelkraft betriebenes Fahrzeug, mit einem mit einer Antriebskurbel mechanisch verbundenen elektrischen Generator (2), der aus dem aufgebrachten Drehmoment elektrische Energie erzeugt, mit einem elektrischen Energiespeicher, mit mindestens einem elektrischen Motor (3), der direkt oder über ein Getriebe Drehmoment auf ein Antriebsrad (4) bringen kann, und mit einer elektrischen oder elektronischen Steuerschaltung (6) mit einem Zwischenkreis mit mindestens einem Umrichter (7, 8), wobei die Steuerschaltung (6) die elektrische Leistung aus dem Generator (2) und/oder aus dem Energiespeicher an den Motor (3) liefern kann, und wobei der elektrische Motor (3) mechanisch von der Antriebskurbel entkoppelt ist. Um zu ermöglichen, dass das Fahrzeug auch ohne elektrischen Energiespeicher fahren kann, ist vorgeschlagen, dass in der Steuerschaltung (6) ein Begrenzer oder ein Regler (11) vorgesehen ist, der bei Ausfall oder Fehlen des Energiespeichers die Zwischenkreisspannung U_{ZK} auf einen Wert (Sollzwischenkreisspannungswert U_{ZK,soll}) in einem gewünschten Bereich regelt.

## Beschreibung

Die Erfindung betrifft einen Antriebsstrang für ein elektromotorisch unterstütztes, kettenloses, mit Muskelkraft betriebenes Fahrzeug, mit einem mit einer Antriebskurbel mechanisch verbundenen elektrischen Generator, der aus dem aufgebrachten Drehmoment elektrische Energie erzeugt, mit einem elektrischen Energiespeicher, mit mindestens einem elektrischen Motor, der direkt oder über ein Getriebe Drehmoment auf ein Antriebsrad bringen kann, und mit einer elektrischen oder elektronischen Steuerschaltung mit einem Zwischenkreis mit mindestens einem Umrichter, wobei die Steuerschaltung die elektrische Leistung aus dem Generator und/oder aus dem Energiespeicher an den Motor liefern kann, und wobei der elektrische Motor mechanisch von der Antriebskurbel entkoppelt ist.

Die Erfindung eignet sich für ein EPAC (Electric Power Assisted Cycle), ein Pedelec, ein Elektrofahrrad (E-Bike) oder ein anderes Kleinfahrzeug mit Kurbelantrieb (Pedalantrieb, wozu hier explizit auch ein Handkurbelantrieb gezählt wird), bei dem die kraftaufnehmende Kurbel eine Tret- oder Handkurbel ist, die von einem Menschen bewegt wird.

Da der Mensch mehr Kraft in den Beinen hat als in den Armen, haben sich Fahrräder mit Pedalantrieb durchgesetzt. Fahrzeuge mit Handkurbel oder einer Art Ruderantrieb oder mit gegeneinander verkippbaren Tretflächen sind auch bekannt, hier ist die Erfindung auch einsetzbar, solange aus einer Hin- und Herbewegung eines Körperteils eines Menschens eine Antriebswelle in Rotation versetzt wird.

Fahrräder mit Elektrounterstützung sind sogenannte Hybridfahrzeuge, da sie zwei Antriebe haben, nämlich den Pedalantrieb (Körperkraft) und den Elektromotor. Sie können mit parallelem oder mit seriellem Hybridantrieb ausgestattet sein.

Paralleler Hybrid heißt, dass beide Antriebe mechanische Verbindung zur Antriebsachse haben. Sie können zugleich auf die Antriebsachse wirken. Der Elektromotor kann also zugleich mit dem Pedalantrieb auf das angetriebene Hinterrad wirken, was die Drehmomente der einzelnen Antriebe addiert. So sind die meisten E-Bikes aufgebaut. Der Pedalantrieb wirkt über eine Kette auf das Hinterrad, der Elektromotor am Tretlager oder an der Hinterachse wirkt unterstützend. Die Summe der Drehmomente wirkt auf das Hinterrad. Diese Fahrzeuge haben immer eine Kette oder ein Äquivalent, wie einen Zahn- oder Keilriemen. So ist auch der "Schaeffler Bio-Hybrid" aufgebaut, der eine Art Fahrrad mit Dach und vier Rädern ist. Auch Fahrräder mit Pedalantrieb am Hinterrad und mit Elektromotor am Vorderrad fallen unter den Begriff parallel, da beide Antriebe gleichzeitig auf die (hier zwei) Antriebsachsen wirken.

Serieller Hybrid heißt, dass der zweite Antrieb keine mechanische Verbindung zur Antriebsachse hat. Bei diesen Fahrrädern wirkt der Pedalantrieb nur auf einen Generator und nicht auf das Antriebsrad. Diese Fahrräder brauchen also keine Kette (oder Riemen) und werden als kettenlos bezeichnet. Die vom Fahrer erzeugte Leistung wird zusammen mit Leistung aus dem Energiespeicher zu einem Elektromotor am Antriebsrad geleitet. Vorteilhaft ist der Verzicht auf eine Kette, die ja eventuell die Kleidung verschmutzen kann, und auf eine Kettenschaltung, die gewartet werden muss. Auch für Klappräder sind Kettenantriebe eine Herausforderung. Bei kettenlosen Fahrzeugen ist der elektrische Motor also mechanisch von der Antriebskurbel entkoppelt.

Solche kettenlosen seriellen Hybridantriebe sind aus der KR 2017 012 1837 (Fahrrad vertrieben unter "Mando Footloose") oder aus der DE 10 2013 012 208 A1 (Fahrrad vertrieben unter "EE-Speedbike") bekannt.

Als elektrische Energiespeicher werden an sich bekannte Akkumulatoren (Batterien, Akkus, in der weiteren Beschreibung einfach Akkus genannt) verwendet, die die elektrische Leistung mit einer reversiblen chemischen Reaktion speichern und wieder als elektrische Leistung abgeben können. Bei Fahrrädern haben sich heute Lithium-Ionen-Akkus durchgesetzt, die bei geringem Gewicht eine hohe Speicherfähigkeit (Kapazität) haben und ausreichend oft auf- und entladbar sind. Einsetzbar sind jedoch auch andere Speicher, wie zum Beispiel Kondensatoren oder Superkondensatoren (Supercaps, SC).

Der Akku dient beim E-Bike zur Unterstützung der durch den Fahrer aufgebrachten Leistung. Die wirkende Antriebsleistung setzt sich aus der Fahrerleistung und der entnommenen elektrischen Leistung aus dem Akkumulator zusammen.

Weiterhin dient der Akku der Stabilisierung der Fahrzeugspannung - die bei Fahrzeugen mit Zwischenkreis der Zwischenkreisspannung entspricht -, also der Spannung, aus der der Antriebsmotor gespeist wird. Die Regelung des Antriebsmotors ist auf diese Spannung abgestimmt. Bei Fahrzeugen, deren Pedale einen Generator treiben, entsteht in der Regel Wechselspannung und Wechselstrom oder eine dreiphasige Spannung und Drehstrom, der in einem Umrichter in Gleichstrom umgewandelt wird, um ihn im Akku zu speichern. Der dem Akku entnommene Gleichstrom oder der Strom aus dem Generator werden dann in einem zweiten Umrichter in Wechselstrom oder Drehstrom umgewandelt und an den Antriebsmotor geleitet. Für diese Wandlung werden generell Konverter verwendet, welche vom Zwischenkreis stabilisiert und gepuffert werden. Der Akku bildet mit dem Zwischenkreis den Energiespeicher des Systems und dient - solange funktionsfähig auf einem bestimmten Spannungsniveau - der Stabilisierung der Zwischenkreisspannung. Die in der elektronischen Steuerschaltung oder im Leistungskreis verwendeten Bauteile sind für eine maximale Betriebsspannung ausgelegt, wobei bei sachgerechter Handhabung durch den Akku sichergestellt ist, dass die Spannung im Leistungskreis (Zwischenkreisspannung) nicht überschritten wird.

Die oben genannte DE 10 2013 012 208 A1 beschreibt einen Antriebsstrang für ein elektromotorisch unterstütztes, kettenloses, mit Muskelkraft betriebenes Fahrzeug, mit einem mit einer Antriebskurbel mechanisch verbundenen elektrischen Generator, der aus dem aufgebrachten Drehmoment elektrische Energie erzeugt, mit einem elektrischen Energiespeicher, mit einem elektrischen Motor, der direkt oder über ein Getriebe Drehmoment auf ein Antriebsrad bringen kann, und mit einer elektrischen oder elektronischen Steuerschaltung mit einem Zwischenkreis mit zwei Umrichtern, wobei die Steuerschaltung die elektrische Leistung aus dem Generator und/oder aus dem Energiespeicher an den Motor liefern kann, und wobei der elektrische Motor mechanisch von der Antriebskurbel entkoppelt ist. Dieser Antriebsstrang bildet den Oberbegriff des Anspruchs 1.

Während es bei parallelen Hybriden kein Problem ist, wenn der Akku fehlt oder defekt ist, denn dann kann das Fahrzeug über den mechanischen Kettenantrieb immer noch zumindest langsam gefahren werden (der Antriebsmotor wird dann mitgeschleppt oder ist durch einen Freilauf entkoppelt), fehlt diese Rückfallposition beim seriellen Hybrid, der ja kettenlos ist.

Aufgabe der Erfindung ist es, einen Antriebsstrang für ein pedalgetriebenes kettenloses Fahrzeug vorzuschlagen, das auch bei Ausfall des Akkus gefahren werden kann.

Die Lösung der Aufgabe erfolgt erfindungsgemäß durch einen Antriebsstrang mit den Merkmalen des Anspruchs 1. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Erfindungsgemäß ist ein Antriebsstrang vorgeschlagen für ein elektromotorisch unterstütztes, kettenloses, mit Muskelkraft betriebenes Fahrzeug, mit einem mit einer Antriebskurbel mechanisch verbundenen elektrischen Generator, der aus dem aufgebrachten Drehmoment elektrische Energie erzeugt, mit einem elektrischen Energiespeicher, mit mindestens einem elektrischen Motor, der direkt oder über ein Getriebe Drehmoment auf ein Antriebsrad bringen kann, und mit einer elektrischen oder elektronischen Steuerschaltung mit einem Zwischenkreis mit mindestens einem Umrichter, wobei die Steuerschaltung die elektrische Leistung aus dem Generator und/oder aus dem Energiespeicher an den Motor liefern kann, und wobei der elektrische Motor mechanisch von der Antriebskurbel entkoppelt ist, wobei erfindungsgemäß in der Steuerschaltung ein Begrenzer oder ein Regler vorgesehen ist, der bei Ausfall oder Fehlen des Energiespeichers die Zwischenkreisspannung U_{ZK} auf einen Wert (Sollzwischenkreisspannungswert U_{ZK,soll}) in einem gewünschten Bereich regelt.

Auf einem seriell hybriden E-Bike ohne Akku und ohne erfindungsgemäßen Regler könnte der Generator eine ungeregelte, zu hohe Spannung erzeugen, die die Bauelemente der Schaltung zerstören könnte. Hier greift die Erfindung ein und begrenzt die erzeugte Spannung oder regelt sie auf zulässige Werte.

Ohne puffernden Akku wird also die vom Generator erzeugte Leistung zum einen zum Betreiben der elektronischen Komponenten, zum anderen zum Betreiben des Antriebsmotors verwendet. Ohne erfindungsgemäße Regelung könnte es also passieren, dass die erzeugte Spannung im Zwischenkreis zu hoch wird, also so hoch, dass elektronische Bauteile zerstört werden, oder dass sie zu niedrig wird, um das Fahrzeug über den Motor anzutreiben.

Erfindungsgemäß wird die Zwischenkreisspannung nicht nur nach oben begrenzt, sondern auch oberhalb des minimal für den Betrieb notwendigen Zwischenkreisspannungswerts gehalten. Die Spannung für den Zwischenkreis wird in einem zulässigen Fenster gehalten, wobei die Untergrenze der Mindestwert für die Aufrechterhaltung des Betriebs der Schaltung und die Obergrenze die von den Bauteilen maximal zulässige Spannung (zum Beispiel 20, 36 oder 48 V) ist.

Das heißt, dass die Steuerschaltung bevorzugt die Zwischenkreisspannung nach oben so begrenzt, dass sie unterhalb des maximal zulässigen Zwischenkreisspannungswerts gehalten wird, und nach unten so begrenzt, dass sie nicht zu niedrig für den Betrieb des Systems wird. Die Steuerschaltung regelt zum Beispiel die Motorleistung so, dass die Zwischenkreisspannung U_{ZK} im gewünschten Bereich liegt.

Zur erfindungsgemäßen Regelung kann also vorgesehen sein, dass bei fehlendem oder defektem Akku von der vom Generator erzeugten Leistung ein Teil zur Versorgung der Elektronik abgezweigt wird.

In einer bevorzugten Ausführung erfolgt vor dem Regler ein Vergleich zwischen der Zwischenkreisspannung und der Sollzwischenkreisspannung.

Die erfindungsgemäße Regelung sorgt dafür, dass genug Spannung für den Betrieb der Schaltung da ist (Entnahme von zu viel Leistung führt sonst zur Absenkung der Zwischenkreisspannung und damit gegebenenfalls zum Abschalten des Antriebssystems) und dass der Rest der durch Treten erzeugten Leistung zum Antriebsmotor kommt. So ist zumindest ein langsames Fahren (zum Beispiel mit 10 km/h) möglich, ohne dass Bauteile zerstört werden. Ein kurzzeitiger Leistungsüberschuss, der sonst zum unzulässigen Anstieg der Zwischenkreisspannung führen würde, wird so zuverlässig verhindert.

Bei fehlendem oder defektem Akku fließt die vom Fahrer am Generator erzeugte Leistung also direkt in Richtung Motor. Die Versorgung des Antriebsmotors mit elektrischer Energie ist erfindungsgemäß so geregelt, dass die im Generator erzeugte elektrische Leistung mit nur geringen Abweichungen (geringe Leistungen können zum Laden und Entladen der Zwischenkreiskondensatoren genutzt werden) abzüglich der für die Versorgung der Elektronik erforderlichen Leistung dem Antriebsmotor zugeführt wird. Dies verhindert einen unzulässigen Anstieg der Zwischenkreisspannung. Erfindungsgemäß wird aber auch nicht zu viel Leistung zur Versorgung des Antriebsmotors entnommen, da dies sonst zur Absenkung der Zwischenkreisspannung führen würde, woraus gegebenenfalls ein Abschalten des Antriebssystems folgen würde mit der Konsequenz, dass kein Fahren mehr möglich wäre.

Die Zwischenkreisspannungsregelung regelt die Zwischenkreisspannung so, dass die in den Zwischenkreis eingespeiste elektrische Leistung bevorzugt gleich der entnommenen elektrischen Leistung ist, sobald die Zwischenkreisspannung einen gewissen Wert erreicht hat. Durch diese Regelung folgt die Istzwischenkreisspannung einer vorgegebenen Sollzwischenkreisspannung, die so gewählt sein soll, dass die maximal zulässige Zwischenkreisspannung (begrenzt durch die Spannungsfestigkeit der Zwischenkreiskondensatoren) nicht überschritten und die minimale Zwischenkreisspannung (Mindestspannung für die Spannungsregler und die Spannungsüberwachungsfunktionen) nicht unterschritten wird. Eine beispielhaft gewählte Sollzwischenkreisspannung kann bei 45 V liegen, wenn ein 48 V System eingesetzt ist.

In einer bevorzugten Ausführung der Erfindung ist der Generator drehzahlgeregelt, um das Fahren angenehmer oder gewohnter zu machen. Das heißt, die Drehzahl des Generators an der Tretkurbel ist in irgendeiner Weise mit der Drehzahl des Antriebsrades gekoppelt. Wäre das nicht der Fall, würde beim Losfahren aus dem Stand das Gewicht des Fahrers auf die Pedale dazu führen, dass sich der Generator schnell dreht und der Fahrer praktisch "ins Leere" tritt, während er aber erwartet, wie von einem normalen Fahrrad gewohnt, dass beim Losfahren aus dem Stand ein deutlicher Widerstand die Drehbewegung hemmt. Mit steigender Drehzahl des Antriebsrads kann dann auch die Generatordrehzahl steigen. Die Hemmung durch den Generator kann dann kleiner werden oder ganz entfallen.

In einer bevorzugten Ausführung der Erfindung ist der elektrische Motor drehmomentgeregelt, um auch so ein von normalen Fahrrädern her gewohntes Verhalten nachzubilden. Das vom Motor aufgebrachte Drehmoment ist dann in irgendeiner Weise mit dem Drehmoment gekoppelt, das der Fahrer an der Tretkurbel aufbringt. Festes Treten führt also zur Beschleunigung, leichteres Treten hält die Geschwindigkeit, so wie es der Fahrer gewohnt ist.

Zur Lösung des Problems Fahren eines Pedelecs ohne Kette und Akku könnte theoretisch auch vorgeschlagen werden, einen zweiten Elektromotor als Hilfsmotor vorzusehen, der zum Beispiel am Vorderrad oder am Hinterrad oder an einem zweiten Hinterrad angeordnet ist. Diese Lösung mit zwei Motoren ist aber vom Herstellungspreis und vom Gewicht her nicht günstig. Die Erfindung kann auch bei Fahrzeugen mit mehreren Motoren (zum Beispiel für Cargofahrzeuge) eingesetzt werden. Bevorzugt ist vom Gewicht her aber, nur einen einzigen elektrischen Motor einzusetzen. Dieser kann ein Gleichstrommotor oder ein Wechselstrommotor sein. Bevorzugt ist aber die Verwendung eines Drehstrommotors.

Der elektrische Motor kann bei einem einspurigen Fahrzeug (zum Beispiel einem Fahrrad) sowohl am Vorderrad als auch am Hinterrad angeordnet sein. Bevorzugt befindet er sich wegen der harmonischer zu fahrenden Gewichtsverteilung am Hinterrad, besonders bevorzugt ist er als Radnabenmotor ins Hinterrad integriert.

Die Erfindung eignet sich zum Einsatz in Fahrzeugen (einspurig oder mehrspurig) mit zwei, drei oder vier Rädern aller Gewichts- und Größenklassen. Besonders geeignet ist sie aber für leichtere Fahrzeuge wie EPACs oder Fahrräder mit zwei Rädern. Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: schematisch einen an sich bekannten seriellen Antriebsstrang für ein Pedelec,
Fig. 2: ein Prinzipschaltbild eines Ausschnittes eines erfindungsgemäßen Antriebsstrangs.

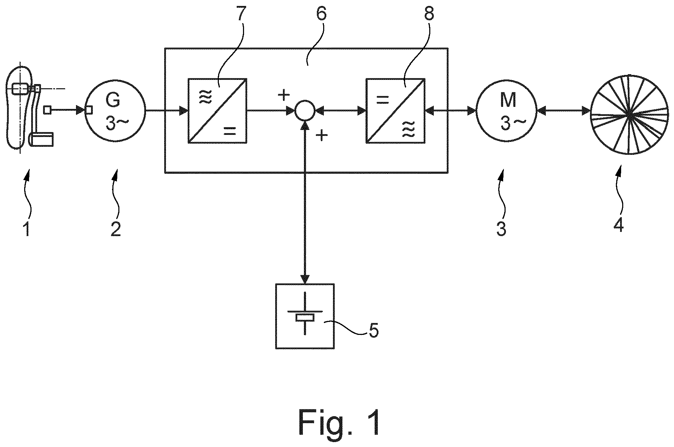

Fig. 1 zeigt einen Antriebsstrang eines Pedelecs, wie er aus der genannten DE 2013 012 208 A1 vorbekannt ist (dort Fig. 4). Eine Tretkurbel 1 ist mit einem elektrischen Generator 2 verbunden und überträgt das vom Fahrer erzeugte Drehmoment auf den Generator 2, wo es in elektrische Energie umgewandelt wird. Ein elektrischer Motor 3 dient als Antrieb für ein Antriebsrad 4. Vorgesehen sind weiterhin ein elektrischer Energiespeicher (Akku 5) und eine Steuerschaltung 6 zur elektrischen Verkoppelung des Generators 2 mit dem Motor 3 und dem Akku 5. Der Generator 2 und der Motor 3 sind als Drehstrommaschinen ausgebildet. Die elektrische Steuerschaltung 6 umfasst einen ersten Umrichter 7 (Konverter, Stromrichter) zur Umwandlung des Dreiphasenwechselstromes (AC) des Generators 2 in einen Gleichstrom (DC) und gegebenenfalls umgekehrt und einen zweiten Umrichter 8 zur Umwandlung eines Gleichstromes (DC) in einen Dreiphasenwechselstrom (AC) für den Motor 3. Die Doppelpfeile zeigen an, dass Leistung, Drehmoment oder Strom in beide Richtungen fließen können. So kann der Akku 5 geladen und entladen werden, Strom kann im unterstützenden Fahrbetrieb vom zweiten Konverter 8 zum Motor 3 fließen und im Rekuperationsbetrieb (Rollen, Bremsen, Bergabfahren), wenn der Motor 3 als Generator wirkt, weil er vom Rad 4 angetrieben wird, vom Motor 3 zur Steuerschaltung 6 und dann zum Akku 5. Drehmoment kann im Fahrbetrieb vom Motor 3 zum Rad 4 übertragen werden, im Rekuperationsbetrieb vom Rad 4 zum Motor 3.

Realisiert ist die Schaltung 6 mit einem Zwischenkreis mit den beiden Umrichtern 7 und 8 und bildet einen AC/AC-Konverter, der aus dem Wechselstrom (AC) des Generators 2 über die Umwandlung in Gleichstrom (DC) - plus oder minus Gleichstrom aus dem Akku 5 oder in den Akku 5 - einen anderen Wechselstrom (AC) für den Antriebsmotor 3 macht. Die Schaltung wird auch Gleichspannungszwischenkreis genannt, und weist oft als Zwischenspeicher für die Energie einen Zwischenkreiskondensator auf, der die in den Halbwellen steckende Energie phasenweise aufnimmt und wieder abgibt.

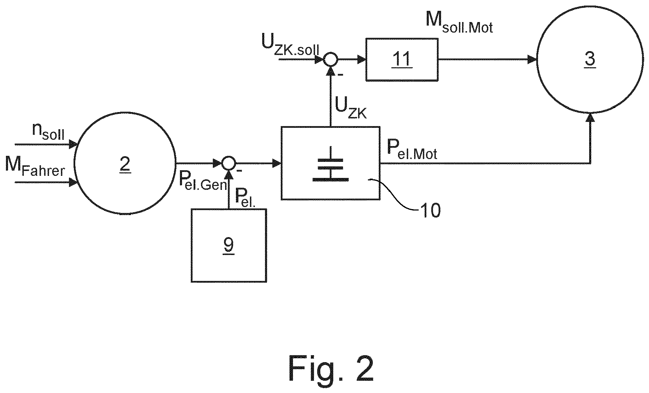

Fig. 2 zeigt einen Ausschnitt aus einem erfindungsgemäßen Antriebsstrang, der dem Antriebsstrang der Fig. 1 ähnlich ist. Gezeigt sind die Bauelemente Elektronikversorgung 9, Zwischenkreiskondensator(en) 10 und der erfindungsgemäße Regler 11 zwischen Generator 2 und Motor 3.

Über die Tretkurbel 1 bringt der Fahrer ein Drehmoment M_{Fahrer} mit einer bestimmten Drehzahl nₛₒₗₗ in den Generator 2 ein (Pedalierleistung). Aus dem Generator 2 fließt die elektrische Leistung P_{el,Gen} des Generators 2. Die Elektronikversorgung 9 benötigt die Leistung Pₑₗ (zum Beispiel 7 W). Diese Leistung wird abgezweigt, so dass nur die Differenz zwischen P_{el,Gen} und Pₑₗ zum Zwischenkreis fließt. Der/die Zwischenkreiskondensator(en) 10 werden auf die Zwischenkreisspannung U_{ZK} geladen. Die resultierende elektrische Leistung (Generatorleistung P_{el,Gen} minus Leistung Pₑₗ zur Versorgung der Bauteile) erzeugt im Zwischenkreis also die Spannung U_{ZK}, die mit der Sollzwischenkreisspannung U_{ZK,soll} des Regelkreises verglichen wird. Entsprechend der Abweichung wird vom Regler 11 ein Sollmoment M_{soll,Mot} an den drehmomentgeregelten Motor 3 gesendet, so dass gegebenenfalls eine entsprechende Leistung P_{el,Mot} aus dem Zwischenkreis dem Motor 3 zugeführt wird. Am Regler 11 liegt also die Differenz der beiden Spannungen an, der basierend auf dieser Differenz die Leistung am Motor so verstellt, dass die Zwischenkreisspannung U_{ZK} auf den Zwischenkreisspannungssollwert U_{ZK,soll} sinkt oder steigt.

Der Regler 11 ist in dieser Ausführung als PID-Regler ausgebildet und hält die Spannung des Zwischenkreises im erlaubten Rahmen und vermeidet Spannungsspitzen, die ohne den puffenden Akku 5 auftreten könnten. Vom Regler 11 geht das Solldrehmoment M_{soll,Mot} an den Motor 3. Das erfindungsgemäße Regelprinzip sorgt durch eine Soll-Drehmomentvorgabe an den Motor 3 eben dafür, dass dem Motor 3 entsprechende elektrische (Überschuss-) Leistung zugeführt wird, damit das Spannungsniveau im Zwischenkreis möglichst konstant bleibt und nicht weiter steigt.

### Bezugszeichenliste

- 1: Tretkurbel
- 2: Generator
- 3: Motor
- 4: Antriebsrad
- 5: Akku
- 6: Steuerschaltung
- 7: erster Umrichter
- 8: zweiter Umrichter
- 9: Elektronikversorgung
- 10: Zwischenkreiskondensator
- 11: Regler

## Patentansprüche

1. Antriebsstrang für ein elektromotorisch unterstütztes, kettenloses, mit Muskelkraft betriebenes Fahrzeug, mit einem mit einer Antriebskurbel mechanisch verbundenen elektrischen Generator (2), der aus dem aufgebrachten Drehmoment elektrische Energie erzeugt, mit einem elektrischen Energiespeicher, mit mindestens einem elektrischen Motor (3), der direkt oder über ein Getriebe Drehmoment auf ein Antriebsrad (4) bringen kann, und mit einer elektrischen oder elektronischen Steuerschaltung (6) mit einem Zwischenkreis mit mindestens einem Umrichter (7, 8), wobei die Steuerschaltung (6) die elektrische Leistung aus dem Generator (2) und/oder aus dem Energiespeicher an den Motor (3) liefern kann, und wobei der elektrische Motor (3) mechanisch von der Antriebskurbel entkoppelt ist, **dadurch gekennzeichnet, dass** in der Steuerschaltung (6) ein Begrenzer oder ein Regler (11) vorgesehen ist, der bei Ausfall oder Fehlen des Energiespeichers die Zwischenkreisspannung U_{ZK} auf einen Wert (Sollzwischenkreisspannungswert U_{ZK,soll}) in einem gewünschten Bereich regelt.

2. Antriebsstrang nach Anspruch 1, **dadurch gekennzeichnet, dass** die Steuerschaltung (6) die Zwischenkreisspannung U_{ZK} nach oben so begrenzt, dass sie unterhalb des maximal zulässigen Zwischenkreisspannungswerts gehalten wird, und nach unten so begrenzt, dass sie nicht zu niedrig für den Betrieb des Systems wird.

3. Antriebsstrang nach Anspruch 1 oder Anspruch 2, **dadurch gekennzeichnet, dass** die Steuerschaltung (6) die Motorleistung des oder der elektrischen Motor(en) (3) so regelt, dass die Zwischenkreisspannung U_{ZK} im gewünschten Bereich liegt.

4. Antriebsstrang nach einem der vorhergehenden Ansprüche, **dadurch gekennzeichnet, dass** von der vom Generator (2) erzeugten Leistung P_{el,Gen} ein Teil Pei zur Versorgung der Elektronik abgezweigt wird.

5. Antriebsstrang nach einem der vorhergehenden Ansprüche, **dadurch gekennzeichnet, dass** vor dem Regler (11) ein Vergleich zwischen der Zwischenkreisspannung U_{ZK} und der Sollzwischenkreisspannung U_{ZK,soll} stattfindet.

6. Antriebsstrang nach einem der vorhergehenden Ansprüche, **dadurch gekennzeichnet, dass** der Generator (2) drehzahlgeregelt ist.

7. Antriebsstrang nach einem der vorhergehenden Ansprüche, **dadurch gekennzeichnet, dass** der Motor (3) drehmomentgeregelt ist.

8. Antriebsstrang nach einem der vorhergehenden Ansprüche, **dadurch gekennzeichnet, dass** ein einziger Motor (3), bevorzugt ein Drehstrommotor, vorgesehen ist.

9. Antriebsstrang nach einem der vorhergehenden Ansprüche, **dadurch gekennzeichnet, dass** der Motor (3) am Hinterrad, bevozugt als Radnabenmotor, angeordnet ist.

10. Elektrofahrrad mit einem Antriebsstrang nach einem der vorhergehenden Ansprüche.
